# EUROPEAN PATENT APPLICATION

(11) **EP 1 586 965 A1**
(43) Date of publication of application: **19.10.2005**
(21) Application number: 04291023.2
(22) Date of filing: 16.04.2004
(51) Int. Cl.: G05B 19/045

(54) **A synchronous formal language for programming deterministic finite state machines**

(71) Applicant: Athys, 38330 Montbonnot St Martin (FR)
(72) Inventor: Audfray, Philippe, 38330 Biviers (FR); Closse, Etienne, 38000 Grenoble (FR); Weil, Daniel, 3800 Grenoble (FR); Combet-Blanc, Franck, 38410 St Martin d'Uriage (FR)
(74) Representative: Cabinet Hirsch

(57) **Abstract**

A synchronous formal language is used for programming deterministic finite state machines. The language includes a graphical interface, where the behaviour of a finite state machine is represented as a graph of steps and transitions. Actions are associated with steps. A transition between two steps includes
- a pause flag, controlling the cycle during which a condition associated to the transition is evaluated; and
- a pre-emption flag, according to which the condition associated to the transition is evaluated before or after an action associated with the step preceding the transition is executed.
The invention makes it possible for the user to have a graphical representation of the attributes of all types of transitions, without the need to use any text. The representation is simple and compact.

## Description

The invention relates to the field of computers programs and systems, and more specifically to programming of real time systems.

Finite State Machines is required for the programming of a lot of Real time system programming. Examples of such deterministic final state machines include programmable logic controllers (PLC's), which are used for automating industrial systems. More generally, Final State Machines are machines that react to inputs given by an external environment. The behavior of such reactive machines is cyclic and each cycle can be generally decomposed in 4 steps:
- inactive or waiting time;
- reading inputs;
- active or computing;
- writing outputs.
In those systems, usually inputs are not read during computation. The system can therefore be represented as a state machine whose transitions from one step to another are triggered by the inputs and whose stable steps are the steps of the machine during waiting times. In the manufacturing industry, these state machines have most of the time a finite number of steps. These machines are supposed to be deterministic: given a step, the same inputs always produce the same outputs.

IEC 61131-3 Norm defines languages for automation; the languages defined in this norm include languages with a graphical interface, which are LADDER, Function Block Diagram language (FBD), Sequential Function Chart language (SFC). A SFC description is based on three basic components: steps, transitions and actions. Steps can be active or inactive and the set of active steps describes the step of the whole systems. At each cycle, the set of active steps is scanned, actions associated to these steps are executed, transition conditions following active steps are evaluated and steps following the transitions which are enabled are set active for the next cycle. When a transition is enabled, the previous step becomes inactive.

These graphical interfaces are familiar to automation specialists. However, these languages are not formal languages; one of the main drawbacks is therefore that the execution of a program written in one of these languages may differ from a machine to the other. This makes it necessary to simulate or test programs written in one of these languages before it can be run on a given specific machine.

In addition, a number of so-called "synchronous languages" are proposed on the market. A language is synchronous if a program written in the language obeys to the strict synchrony hypothesis: each reaction is atomic. More precisely, the system behaves as if its reaction time is zero: the outputs are logically emitted in the same instant as the inputs. In other words a synchronous system is stable when its outputs are fed back as inputs. From an electrical point of view, a synchronous system is a stable circuit.

A language is formal when it is fully defined by an alphabet and formation rules. The alphabet of a formal language is a set of symbols on which this language is built. The formation rules postulate that certain expressions belong to the language in question and establish how to build well-formed expressions from other well-formed expressions belonging to the language. In a formal language, it is possible to check whether an expression - a series of symbols in the alphabet - is well-formed, that is complies with the rules. SFC, as a language, is no formal, in that it is not possible to unambiguously define whether a SFC graph is well-formed and will therefore have a certain effect when applied to a given finite state machine..

Synchronous formal languages are provided on the market. These include the LUSTRE language provided by VERIMAG (**Gières, France**), the ESTEREL language created by INRIA and Ecole des Mines (France). The product sold under the reference ESTEREL STUDIO by ESTEREL TECHNOLOGIES (France) is a synchronous formal language, which is textual. It is provided with a graphical interface, called SyncChart; however, this graphical interface is not familiar to automation specialists, which is a bar to the extensive use of ESTEREL STUDIO in the field of automation.

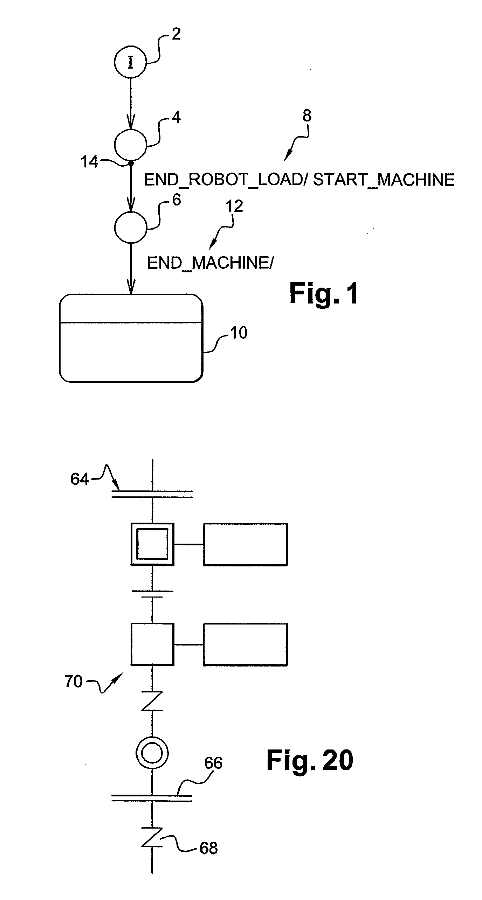

The SyncChart graphical interface depicts steps, transitions and actions as depicted in figure 1. This figure shows an example of a SyncChart program. Steps are referenced 2, 4 and 6, reference 2 showing the initial step of the system. Between steps 4 and 6 is a transition / action 8; the program passes from one step to the next step when the transition between these steps takes the "true" value at a clock pulse or cycle; at this time, the action is executed before passing to the next step. In the example of figure 1, between steps 4 and 6, the transition is the Boolean variable END_ROBOT_LOAD, while the action is referenced START_MACHINE. Assuming step 4 is active, the program passes from step 4 to step 6 when END_ROBOT_LOAD becomes "true" and executes the action START_MACHINE before passing to step 6.

Reference 10 in figure 1 is a text block, that is a step in which textual code may be executed. Between steps 6 and 10 is provided a transition / action 12, which is reduced to the transition END_MACHINE. Assuming step 6 is active, the program passes to step 10 when the Boolean variable END_MACHINE - no action being performed.

As shown in figure 1, the transition / action between two steps may be qualified. This appears in figure 1, where a dot 14 is provided in transition / action 8; the dot is representative of the fact that transition / action 8 has a strong abort; in other words, as soon as the transition END_ROBOT_LOAD becomes true, the program passes to step 6, even if the previous action is not fully terminated. On the contrary, transition / action 12 is not provided with a dot, and exemplifies a weak abort: the program passes only from step 6 to step 10 when the Boolean variable END_MACHINE is true and when the previous action is fully terminated for the current cycle.

The graphical interface of ESTEREL STUDIO, as exemplified in figure 1, makes it difficult to program deterministic finite state machines. There remains a need for a synchronous formal language, with a graphical interface, which would be familiar to automation specialists and would provide extended programming capabilities.

According to the invention, there is provided a synchronous formal language for programming deterministic finite state machines controlling a physical process. The language includes a graphical representation, where the behaviour of a finite state machine is represented as a graph of steps and transitions. Actions are associated with steps; a transition between two steps includes
- at least a pause flag, controlling the cycle during which a condition associated to the transition is evaluated; and
- a pre-emption flag, according to which the condition associated to the transition is evaluated before or after an action associated with the step preceding the transition is executed.
The values of the flags are graphically represented in the graphical representation.

The pause flag may comprise an activation flag, in which case
- for one value of the activation flag, the step following the transition is activated as soon as a condition associated to the transition is true; and
- for the other value of the activation flag, at least one cycle is performed in the step preceding the transition.
The values of the activation flag are graphically represented in the graphical representation.

One value of the activation flag may be represented by a continuous line from the step preceding the transition to the transition. The other value of the activation flag may be represented by an interrupted line from the step preceding the transition to the transition.

The pause flag may comprise a delay flag, in which case :
- for one value of the delay flag, the step following the transition is activated in the same cycle as the one during which the transition is activated and
- for the other value of the delay flag, the step following the transition is activated in the cycle following the one during which the transition is activated.
The values of the delay flag are graphically represented in the graphical representation.

One value of the delay flag may be represented by a continuous line from the transition to the step following the transition, while the other value of the delay flag may be represented by an interrupted line from the transition to the step following the transition.

It is possible to provide that the value of the pre-emption flag is represented as a shape of the transition.

In addition, a transition following a set of parallel branches may further include a join flag; a transition with an active join flag is then only evaluated when the parallel branches have all reached a step preceding said transition.

The invention further provides a process for programming a deterministic finite state machine controlling a physical process, which uses this language. The invention also provides a program having
- a routine adapted to describe the behaviour of a finite state machine in the graphical representation of the language;
- a graphical user interface adapted to display a description of the behaviour of a finite state machine in this language.

Last, the invention provides a computer for programming a deterministic finite state machine, the computer having
- a memory storing this language;
- a logical unit adapted to run the language; and
- a display for displaying to the user the graphical interface of the language

A process and language embodying the invention will now be described, by way of non-limiting example, and in reference to the accompanying drawings, where :
- figure 1 is an example of a program in a prior art SyncChart language;
- figure 2 is an example of a transition in a language according to the invention;
- figure 3 is a SyncChart language equivalent of the transition of figure 2;
- figures 4 to 17 provide other examples of transitions in a language according to the invention, with their SyncChart language equivalent;
- figure 18 is an example of parallel branches in a language according to the invention;
- figure 19 is a SyncChart language equivalent of the example of figure 18;
- figure 20 is another example of parallel branches in a language according to the invention.

The invention provides a synchronous formal language for programming deterministic finite state machines. The language includes a graphical representation, where the behaviour of a finite state machine is represented as a graph of steps and transitions. Actions are associated with steps. A transition between two steps includes:
- at least a pause flag, controlling the cycle during which the transition is evaluated; and
- a pre-emption flag, according to which the transition is evaluated before or after an action associated with the transition is executed.
The flag are graphically represented, and not textually represented. This makes it possible to graphically represent in a compact and easy way the various possible transitions of a deterministic finite state machine between its various steps. In addition, this makes it possible for a compiler to analyse the transitions and their attributes, without having to consider the textual information regarding the conditions for the transitions or the actions. For instance, for assessing whether there exists an instantaneous loop, the compiler may solely rely on the graphical information, without having to consider any textual information.

The pause flag notably avoids instantaneous loops. The pre-emption flag makes it possible to stop or not actions associated with steps.

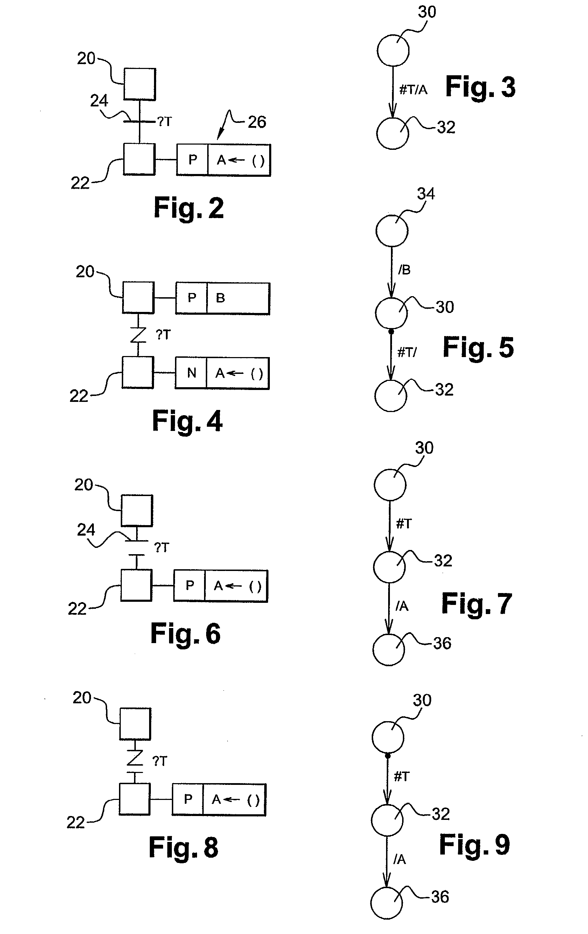

Figures 2 to 17 provide examples of transitions in a language according to the invention. The language uses a pause flag comprised of an activation flag and of a delay flag. The activation flag is representative of whether :
- the step following the transition is activated as soon as the transition condition is true; or
- at least one cycle must be performed in the step preceding the transition before activating the step following the transition.
In other words, the activation flag is representative of whether the program may pass instantaneously through the step preceding the transition.

The delay flag is representative of whether the step following the transition is activated
- in the same cycle as the one during which the transition is activated or
- in the cycle following the one during which the transition is activated.

Each of the activation flag and delay flag has two possible values. Since the pre-emption flag also has two possible values, there are sixteen different transitions in the exemplified language.

Figure 2 is a first example of a transition in a language according to the invention. Steps 20 and 22 are represented by square boxes; the transition between steps 20 and 22 is represented by a horizontal line 24 located between the two steps 20 and 22; as discussed below in reference to figure 4, the transition may also be represented by another symbol - the "Z" symbol in the example. Zero or more actions 26 may be associated to each step; in the example of figure 2, an action is only associated with step 22. This representation is similar to the one used in SFC, which makes it easily understandable for the person skilled in the art of automation. The transition 24 is associated to a condition, marked "T" in figure 2. The transition is "fired" or "activated" when the condition T becomes true, which means that the system may then pass from step 20 to step 22 - subject to the values of the flags, as discussed below.

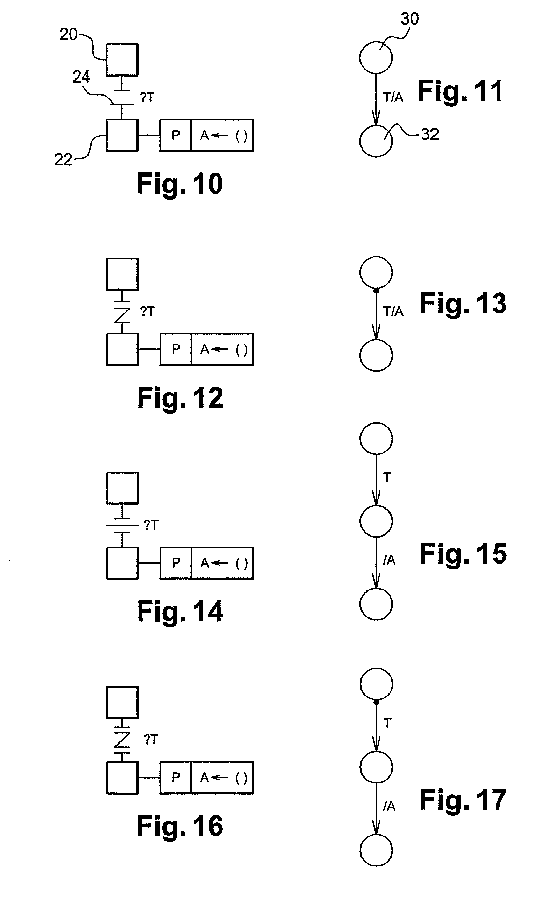

The transition comprises an activation flag. The activation flag has two possible values, which are called, for the sake of convenience only, "Immediate" and "Delayed". When the value of the activation flag is "Immediate", the step following the transition is activated as soon as the transition becomes true; this is represented in figures 2, 4, 6 and 8. In the graphical representation of the figures, the "Immediate" value of the activation flag is represented in that the line from the preceding step to the transition is continuous. On the other hand, when the value is activation flag is "Delayed", at least one cycle must be performed in the step preceding the transition before activating the step following the transition; this is represented in figures 10, 12, 14 and 16. In the graphical representation of the figures, the "Delayed" value of the activation flag is represented in that the line from the preceding step to the transition is discontinuous or interrupted above the transition.

The transition comprises a delay flag. The delay flag has two possible values, which are called, for the sake of convenience only, "Now" and "Next". When the value of the delay flag is "Now", the action associated to the step following the transition is activated right away, in the same cycle as the one in which the transition is evaluated and fired. This is represented in figures 2, 4, 10 and 12. In the graphical representation of the figures, the "Now" value of the delay flag is represented in that the line from the transition to the next step to the transition is continuous. On the other hand, when the value is delay flag is "Next", the action associated to the step following the transition is activated one cycle after the cycle during which the transition is activated or fired. This is represented in figures 6, 8, 14 and 16. In the graphical representation of the figures, the "Next" value of the delay flag is represented in that the line from the transition to the following step is discontinuous or interrupted below the transition.

The transition further comprises a pre-emption flag. The pre-emption flag has two possible values, which are called, for the sake of convenience only, "Urgent" and "Lazy". When the value of the pre-emption flag is "Lazy", the transition is evaluated after an action of the preceding step is executed. This is represented in figures 2, 6, 10 and 14. In the graphical representation of the figures, the "Lazy" value of the pre-emption flag is represented in that the transition is a single horizontal line. When the value of the pre-emption flag is "Urgent", the transition is evaluated before an action of the preceding step is executed; if the transition proves true, this action will actually never be executed. This is represented in figures 4, 8, 12 and 16. In the graphical representation of the figures, the "Urgent" value of the pre-emption flag is represented in that the transition is Z-shaped.

In the rest of the description of figures 2, 4, 6, 8, 10, 12, 14 and 16, the values of the various flags for a transition are given in the following order: activation flag, pre-emption flag, delay flag.

Figure 2 shows an Immediate Lazy Now transition. Assume step 20 is active and condition T becomes true during at a cycle. Then step 22 becomes active and action A is executed. Note that in figure 2, action A is associated with a pulse qualifier P. This pulse qualifier means that action A is performed in the very first cycle when step 22 becomes active and is not performed in the next cycles, if step 22 remains active.

Since the transition has an activation flag with an Immediate value, the process need not spend a cycle in step 20. Thus, assuming step 20 becomes active, transition 24 is evaluated in the same cycle. Thus, in the example of figure 2, steps 20 and 22 may be executed in the same cycle.

Figure 3 shows a SyncChart language equivalent of the transition of figure 2. The transition is a weak abort transition from step 30 to step 32. In addition, the fact that the transition has an immediate activation is represented by the # sign before the condition T for the transition. This textual representation of the flag makes it necessary to combine the graphical and textual information for interpreting the transition. On the contrary, in the example of figure 2, all attributes of the transition are graphically displayed. Text information is solely used for the condition.

Figure 4 shows an Immediate Urgent Now transition. In the example, action B is associated to step 20, with a pulse qualifier. At a given cycle, it is assumed that step 20 is active, for the first time. Then, condition T is tested, before action B is executed. If condition T is true, then the process passes the transition, and action B will not be executed: step 22 will become active and action A will be executed. Thus, action B is only executed when and if condition T is not true.

In addition, in the example of figure 4, action A is associated with a non-stored qualifier N. This qualifier means that action A is performed in any cycle when step 22 is active; thus, if step 22 remains active, action A will be continuously performed.

Figure 5 shows the SyncChart language equivalent of the transition of figure 4. The transition is a strong abort transition from step 30 to step 32; action B is associated with a transition from step 34 to step 30. Figure 5 is a first example showing that the representation in the SyncChart language is more complex and less compact than the representation using the transitions of the invention. As in figure 3, the fact that the transition is immediate is textually represented by the # sign.

Figure 6 shows an Immediate Lazy Next transition. As discussed above, since the transition has a "Next" value for the activation flag, step 22 will only become active one cycle after the transition is fired. Thus, assume step 20 is active at one cycle and condition T is true. Then step 20 will only become active in the next cycle and action A will be performed in the next cycle.

The transition of Figure 6 is preferably the default transition in the language interface. It ensures that steps 20 and 22 are never active in the same instant. If used in a sequence, this transition ensures that the preceding step 20 has been active at least one cycle before being killed if used in a sequence, and that the step 22 following the transition is active once the previous one has been killed. All this means that the two steps around the Immediate Lazy Next transition are never active within the same cycle, and no "blank" cycle separates them.

Figure 7 shows the SyncChart language equivalent of the transition of figure 6. Step 30 corresponds again to step 20. The transition from step 30 to step 32 has a condition #T; the action A is not associated to this transition, so as to ensure the effect of the "Next" value of the delay flag of figure 6. Thus, there is provided another transition from step 32 to step 36, with no condition but an action A. Step 36 corresponds to step 22 in figure 6. In other words, step 32 in figure 7 has no use other than ensuring the delay ensure in figure 8 by the "Next" value of the delay flag. Again, the representation of figure 7 is more complex and less compact.

Figure 8 shows an Immediate Urgent Next transition. The effect of the "Urgent" value of the pre-emption flag is as discussed above in reference to figure 4. However, compared to figure 4, the transition of figure 8 ensures that even if an action associated to step 20 is aborted, the action A associated to step 22 will not be started before the next cycle after the transition is activated or fired.

Figure 9 shows the SyncChart language equivalent of the transition of figure 8. As in figure 7, step 30 corresponds again to step 20. The transition from step 30 to step 32 has a condition #T, with a strong abort; the action A is not associated to this transition, so as to ensure the effect of the "Next" value of the delay flag of figure 8. Thus, there is provided another transition from step 32 to step 36, with no condition but an action A.

Figures 10, 12, 14 and 16 show transitions that respectively correspond to the transitions of figures 2, 4, 6 and 8, the value of the activation flag being "Delayed" instead of "Immediate". Figures 11, 13, 15 and 17 show the corresponding transitions in SyncChart. Figures 10 and 11 are the only figures described in details. It should still be noted that figures 14 and 15 as well as figures 16 and 17 again evidence that the language of the invention provides a more compact and less complex graphical representation of the program.

Figure 10 shows a Delayed Lazy Now transition. The Delayed value of the activation flag is represented in figure 10 by the interruption on the line joining the step 20 to the transition 24. As discussed above, when the value of the activation flag is Delayed, the program spends at least one cycle on the step preceding the transition. In other words, assume step 20 becomes active at a given cycle. The fact that the activation flag is Delayed ensures that step 20 will remain active for at least one cycle, even if the condition T for the transition is true at the given cycle.

Figure 11 shows the corresponding SyncChart language transition. The transition is a weak abort transition, similar to the one of figure 3. However, the condition / action is written as T/A, without the # sign. This indicates that the system will spend at least one cycle in step 30.

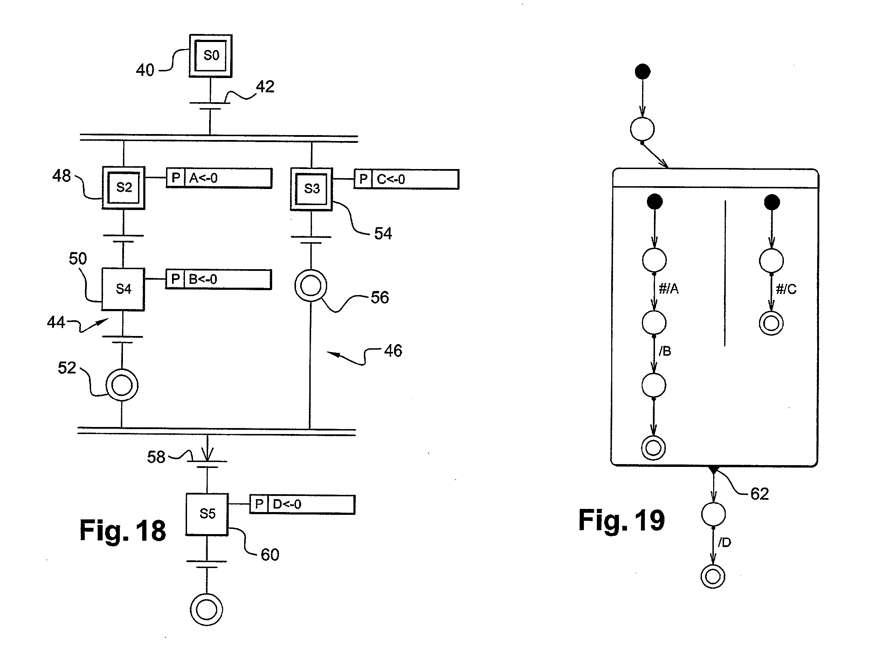

Figure 18 shows an example of parallel branches in a language according to the invention; several processes may be launched in parallel by writing parallel branches starting from one transition. The parallel branches are all triggered under the same condition, which means that their initial steps are activated together - that is in the same cycle - as soon as the preceding transition is cleared. Figure 18 shows step 40 and transition 42 - which happens to be an Immediate Lazy Next transition. The transition 42 is followed by a series of parallel branches 44, 46. In figure 18, branch 44 has two steps 48, 50 and a final step 52, with no associated action. Step 52 is representative of the end of branch 44. Branch 46 has a single transition, between step 54 and final step 56. Transition 58 from the last step of the parallel branches is followed by step 60. Another attribute exists for such transitions from parallel branches. Under normal conditions, the transition is activated when a step preceding the transition in one of the parallel branches becomes active. However, if the transition has a Join flag, the transition is evaluated and the step following the transition is only activated when all parallel branches have reached their final step preceding the transition - in the example of figure 18, steps 52 and 56. The Join flag is exclusive of any pre-emption on the transition; it is also exclusive of any activation flag. However, a Join transition may have a delay attribute (Next or Now).

In the example of figure 18, transition 58 has a Join flag which is represented in figure 18 by an arrow directed to the transition 58. Transition 58 also has a Next delay. The Join attribute means that transition 58 may only be activated when steps 52 and 56 in both parallel branches are active.

Figure 19 shows a SyncChart language equivalent of the example of figure 18. The Join attribute is represented by triangle 62. Again, one can see from the comparison of figures 19 and 18 that the representation in figure 19 is more complex and uses textual elements for qualifying the transitions.

Note that the formalism of parallel branch may be used even with a single branch. This is represented in figure 20. In this case, there is one single branch 70 in parallel boxes 64, 66, with several steps. Pre-emption flag 68 in the transition following the parallel box makes it possible to interrupt the single branch 70 in any of its steps. In such a case with a single branch, the join transition has no use.

The language of the invention may be used for programming a finite state machine, on a computer. The computer is equipped with a logical unit for running or executing programs, with a memory for storing programs to be executed and with the usual types of I/O devices, including a display. A program is stored in the memory and executed in the logical unit. The program has a routine adapted to describe the behaviour of a finite state machine in the language discussed above. In addition, the program has a graphical user interface adapted to display a description of the behaviour of the finite state machine in the language. Thus, when the program is executed, the user may input a description of the finite state machine to the program. The description is displayed by the program, using the graphical interface. This makes it possible for the user to view the description of the finite state machine, in the graphical representation of the language. The graphical representation of the language provides the advantages discussed above.

In addition, the program may be provided with a compiler for checking the rules of the formal language and ensuring that the description complies with the rules. The compiler outputs an executable code adapted to be loaded in a finite state machine for controlling the operation of the machine. Since the language is a formal language, the operation of the finite state machine is adequately described by the program.

The program may be included into a computer-aided design (CAD) system such as the one sold under the trademark CATIA by DASSAULT SYSTEMES. Such a design system allows the user to design a manufacturing cell. Thanks to the presence of the program in the CAD system, the user may also describe the operation of the manufacturing cell, that is the operation of the various finite state machines contained in the manufacturing cell.

The invention is not limited to the preferred embodiment described in reference to the drawings. Notably, the naming of the transition attributes is only given for the sake of convenience. The graphical symbols used for representing transition attributes may be changed, provided the attributes of the transition are graphically displayed.

In the description of the embodiments of the invention, the word "language" does not refer to an abstract concept. A language for programming a deterministic finite state machine is not simply a series of symbols, but represents various possible steps of the machines and is therefore technical. Indeed, finite state machines are used for automating or controlling processes in various fields of the art. In addition, the provision of such a language involves technical considerations, since the language is developed while taking into account the operation of the machines. Last, the fact of providing attributes of the transitions in graphical form makes it possible for the compiler to check the compliance with at least some of the rules, based solely on the graphical information.

## Claims

1. A synchronous formal language for programming deterministic finite state machines controlling a physical process, including a graphical representation, wherein the behaviour of a finite state machine is represented as a graph of steps (20, 22) and transitions (24), wherein actions (26) are associated with steps; and wherein a transition (24) between two steps includes
- at least a pause flag, controlling the cycle during which a condition associated to the transition is evaluated; and
- a pre-emption flag, according to which the condition associated to the transition is evaluated before or after an action associated with the step preceding the transition is executed,
the values of the flags being graphically represented in the graphical representation.

2. The language of claim 1, wherein the pause flag comprises an activation flag, wherein
- for one value of the activation flag, the step following the transition is activated as soon as a condition associated to the transition is true; and
- for the other value of the activation flag, at least one cycle is performed in the step preceding the transition;
and wherein the values of the activation flag are graphically represented in the graphical representation.

3. The language of claim 2, wherein said one value of the activation flag is represented by a continuous line from the step preceding the transition to the transition.

4. The language of claim 2 or 3, wherein said other value of the activation flag is represented by an interrupted line from the step preceding the transition to the transition.

5. The language of one of claims 1 to 4, wherein the pause flag comprises a delay flag and wherein
- for one value of the delay flag, the step following the transition is activated in the same cycle as the one during which the transition is activated and
- for the other value of the delay flag, the step following the transition is activated in the cycle following the one during which the transition is activated,
and wherein the values of the delay flag are graphically represented in the graphical representation.

6. The language of claim 5, wherein said one value of the delay flag is represented by a continuous line from the transition to the step following the transition.

7. The language of claim 5 or 6, wherein said other value of the delay flag is represented by an interrupted line from the transition to the step following the transition.

8. The language of one of claims 1 to 7, wherein the value of the pre-emption flag is represented as a shape of the transition.

9. The language of one of claims 1 to 8, wherein a transition following a set of parallel branches further includes a join flag and wherein a transition with an active join flag is only evaluated when said parallel branches have all reached a step preceding said transition.

10. A process for programming a deterministic finite state machine controlling a physical process, the process using the language of one of claims 1 to 9.

11. A program having
- a routine adapted to describe the behaviour of a finite state machine in a language according to one of claims 1 to 10;
- a graphical user interface adapted to display a description of the behaviour of a finite state machine in said language.

12. A computer for programming a deterministic finite state machine, the computer having
- a memory storing the language according to one of claims 1 to 9;
- a logical unit adapted to run the language;
- a display for displaying to the user the graphical interface of the language.
